Europäisches Patentamt

European Patent Office

Office européen des brevets

(11) Veröffentlichungsnummer: **0 144 747**
**B1**

# (12) EUROPÄISCHE PATENTSCHRIFT

(45) Veröffentlichungstag der Patentschrifft:
07.02.90

(21) Anmeldenummer: 84113254.1

(22) Anmeldetag: 03.11.84

(51) Int. Cl. ⁵: **H 01 M 10/39**, H 01 M 2/10, H 01 M 2/02

(54) Hochtemperatur-Speicherbatterie.

(30) Priorität: 09.11.83 DE 3340425

(43) Veröffentlichungstag der Anmeldung:
19.06.85 Patentblatt 85/25

(45) Bekanntmachung des Hinweises auf die Patenterteilung:
07.02.90 Patentblatt 90/06

(84) Bennante Vertragsstaaten:
AT CH FR GB IT LI

(56) Entgegenhaltungen:
EP-A-0 064 738
FR-A-2 305 034
GB-A-1 097 615
GB-A-1 604 038
US-A-3 823 037

(73) Patentinhaber: Asea Brown Boveri Aktiengesellschaft
Kallstadter Strasse 1
D-6800 Mannheim-Käfertal (DE)

(72) Erfinder: Jessen, Jens Christian
Wasserturmstrasse 39
D-6904 Eppelheim (DE)
Erfinder: Hasenauer, Dieter
Freudenbergstrasse 13
D-6940 Weinheim (DE)

(74) Vertreter: Rupprecht, Klaus, Dipl.-Ing.
c/o Asea Brown Boveri Aktiengesellschaft
Zentralbereich Patente Postfach 100351
D-6800 Mannheim 1 (DE)

## Beschreibung

Die Erfindung bezieht sich auf eine Hochtemperatur-Speicherbatterie gemäß dem Oberbegriff des Patentanspruches 1.

Solche Hochtemperatur-Speicherbatterien, die unter Verwendung von elektrochemischen Speicherzellen aufgebaut sind, werden in vermehrtem Maße für den Elektroantrieb von Fahrzeugen eingesetzt.

Die bis jetzt bekannt gewordenen Hochtemperatur-Speicherbatterien sind aus einer Vielzahl von elektrochemischen Speicherzellen aufgebaut. Für die Bildung von Hochtemperatur-Speicherbatterien, die etwa einen Energieinhalt von 40 kWh aufweisen sollen, sind etwa 500 Speicherzellen erforderlich. Solche Hochtemperatur-Speicherbatterien arbeiten bei einer Temperatur von 350 bis 500°C. Um Wärmeverluste zu vermeiden, sind die Speicherzellen von einer thermischen Isolierung umgeben. Andererseits muß jedoch auch für eine ausreichende Kühlung innerhalb der Hochtemperatur-Speicherbatterie gesorgt werden, damit die Betriebstemperatur der Speicherzellen nicht überschritten und eine Beschädigung derselben verhindert wird.

Um die eingangs genannte Zahl von Speicherzellen im Innenraum einer solchen Hochtemperatur-Speicherbatterie unterbringen zu können, sind spezielle Halterungen erforderlich. Damit die Speicherzellen ausreichend mit einem Kühlmedium, insbesondere Luft gekühlt werden können, müssen die Speicherzellen so angeordnet werden, daß das Kühlmedium die Speicherzellen erreichen kann.

Aus der DE-OS-3 118 693 ist eine Hochtemperatur-Speicherbatterie bekannt, die aus mehreren Modulen aufgebaut ist. Jedes Modul enthält wenigstens 16 Speicherzellen. Die Speicherzellen eines jeden Moduls sind frei tragend gehaltert, d.h. zwischen der inneren Begrenzungswand der Hochtemperatur-Speicherbatterie und den oberen und unteren Stirnflächen der Speicherzellen sind Freiräume vorgesehen, durch die ein Kühlmedium hindurchströmen kann. Um das obere und untere Ende einer jeden Speicherzelle ist ein Klemmelement gelegt, das mit dem jeweiligen Klemmelement der benachbarten Speicherzellen fest verbunden ist. Zwischen jedem Klemmelement und der Speicherzelle ist eine Isolierung angeordnet. Die Speicherzellen eines jeden Moduls sind so über die Klemmelemente zusammengehalten, daß zwischen den Speicherzellen Freiräume verbleiben, zwischen denen das Kühlmedium hindurchströmen kann.

Von Nachteil ist bei dieser Hochtemperatur-Speicherbatterie, daß durch die Verwendung der Klemmelemente, der Abstand zwischen den Speicherzellen eines jeden Moduls größer ist als erforderlich und wegen der Klemmelemente nicht reduziert werden kann.

Aus der FR-A-2 305 034 ist eine elektrochemische Speicherbatterie bekannt, die aus einer Vielzahl von Speicherzellen aufgebaut ist. Die Speicherzellen sind zylinderförmig ausgebildet.

Jeweils vier Speicherzellen sind zu einem Modul zusammengefaßt. Mit Hilfe von ringförmigen Halteelementen sind sie an plattenförmigen Befestigungselementen fixiert.

In der GB-A-1 604 038 ist die Anordnung von Leclanche-Zellen beschrieben, die eine gemeinsame äußere Gehäusebegrenzung aufweisen.

Der Erfindung liegt ausgehend von dem eingangs genannten Stand der Technik die Aufgabe zugrunde, die Halterung der Speicherzellen in einer Hochtemperatur-Speicherbatterie so zu optimieren, daß die Speicherzellen in einer dichteren Packung als bisher angeordnet werden können, eine Verminderung der Speicherzellenkühlung jedoch ausgeschlossen wird.

Diese Aufgabe wird erfindungsgemäß durch die Merkmale des Patentanspruches 1 gelöst.

Durch die erfindungsgemäßen Maßnahmen ist es möglich, die Anzahl der Speicherzellen innerhalb einer Hochtemperatur-Speicherbatterie zu erhöhen, bzw. bei Konstanthaltung der Anzahl von Speicherzellen die Abmessungen der Hochtemperatur-Speicherbatterie gegenüber bekannten Hochtemperatur-Speicherbatterien mit der gleichen Anzahl von Speicherzellen zu reduzieren. Erfindungsgemäß ist jede Speicherzelle eines Moduls gegenüber den angrenzenden Speicherzellen elektrisch isoliert. Diese Isolierung wird durch eine Hülse aus Glimmer oder Glas gebildet, die zwischen dem inneren und äußeren Gehäuseelement einer jeden Speicherzelle angeordnet ist. Die Isolierung kann auch durch eine entsprechende Schicht gebildet werden, die auf die Außenfläche des inneren Gehäuseelementes oder auf die Innenflächen des äußeren Gehäuseelementes aufgetragen wird. Jeder Modul kann zusätzlich mit einer elektrischen Isolierung von seinen Nachbarmodulen getrennt werden. Hierfür wird vorzugsweise eine Matte aus Glimmer verwendet, die zwischen jeweils zwei Module gelegt wird. Die Speicherzellen eines jeden Moduls sind so angeordnet, daß zwischen benachbarten Speicherzellen Freiräume gebildet werden, die sich über die gesamte Länge der Speicherzellen erstrecken und das Hindurchleiten eines Kühlmediums, vorzugsweise das Durchleiten von Kühlluft ermöglichen.

Die Module sind so gehaltert, daß zwischen den oberen und unteren Stirnflächen der Speicherzellen Freiräume gebildet werden, durch die ebenfalls Kühlluft hindurchströmen kann. Die durch die Freiräume strömende Kühlluft wird in die zwischen den Speicherzellen der Module befindlichen Freiräume eingeleitet. Insbesondere geschieht das Einleiten beispielsweise von dem über den Speicherzellen angeordneten Freiraum aus. Die zwischen den Speicherzellen hindurchgeleitete Kühlluft wird dann über den unteren Freiraum abgeleitet. Die Abmessungen der zwischen den Speicherzellen eines Moduls befindlichen Freiräume ist so groß, daß es zu keinem Druckabfall der Kühlluft innerhalb des jeweiligen Freiraums kommt.

Ein weiterer Vorteil der Erfindung ist in der Verminderung der axialen Temperaturdifferens zu sehen, die dadurch erreicht wird, daß das Zellgehäuse einer jeden Speicherzelle mehrteilig ausgebildet und auch aus verschiedenen Materialien hergestellt ist. Zusätzlich ist ein Isoliermaterial, insbesondere ein Glimmerrohr zwischen den Gehäuseelementen angeordnet. Erfindungsgemäß ist das innere Gehäuseelement aus Aluminium oder einem anderen metallischen Material gefertigt. Das äußere Gehäuseelement kann aus Stahl, dispersionsgehärtetem Aluminium, Titan oder Nickel hergestellt werden. Eine besonders geringe Temperaturdifferens entlang der Speicherzelle wird dann erreicht, wenn das innere Gehäuseelement aus Aluminium, das äußere Gehäuseelement aus Stahl gefertigt und zwischen beiden eine der oben beschriebenen Isolierung angeordnet ist. Die Isolierung dämpft die Kühlung. Das innere Gehäuseelement aus Aluminium sorgt durch seine gute Wärmeleitung für den Temperaturausgleich, so daß eine weitgehend gleichmäßige Randtemperatur erzielt und eine gleichmäßige Kühlung der Speicherzelle bewirkt werden kann. Erfindungsgemäß kann jede Speicherzelle einzeln einem Modul entnommen und wieder eingesetzt werden. Jeder Modul kann unabhängig von den Nachbarmodulen aus der Hochtemperatur-Speicherbatterie entnommen und in diese wieder eingesetzt werden. Durch die erfindungsgemäßen Maßnahmen, insbesondere durch die spezielle Ausgestaltung der Speicherzellen und ihrer Verbindungen zu einem Modul wird erreicht, daß beispielsweise eine Hochtemperatur-Speicherbatterie mit einem Energieinhalt von 18 kWh eine gewichtsbezogene Energie bzw. Leistung von 125 Wh/kg bzw. 130 W/kg aufweist. Die volumenbezogene Energie bzw. Leistung einer solchen Hochtemperatur-Speicherbatterie beträgt 130 Wh/l bzw. 135 W/l.

Weitere erfindungswesentliche Merkmale sind in den Unteransprüchen gekennzeichnet.

Die Erfindung wird nachfolgend anhand von Zeichnungen erläutert.
Es zeigen:

Figur 1: zwei miteinander verbundene Speicherzellen eines Moduls,
Figur 2: einen vollständigen Modul,
Figur 3: eine Hochtemperatur-Speicherbatterie,
Figur 4: die Variante eines Modulaufbaus.

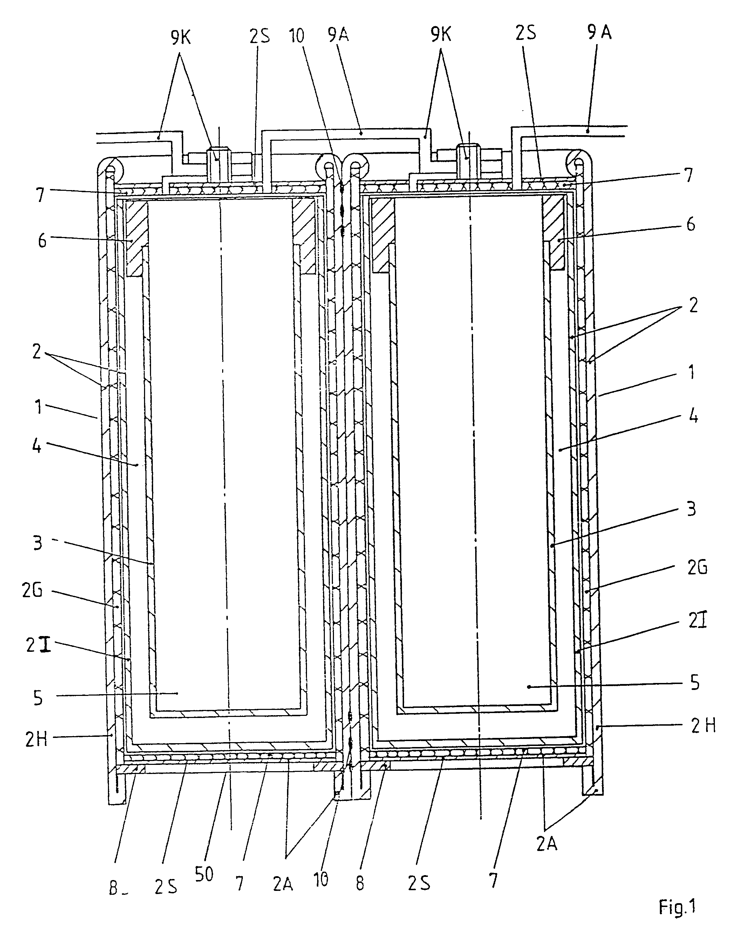

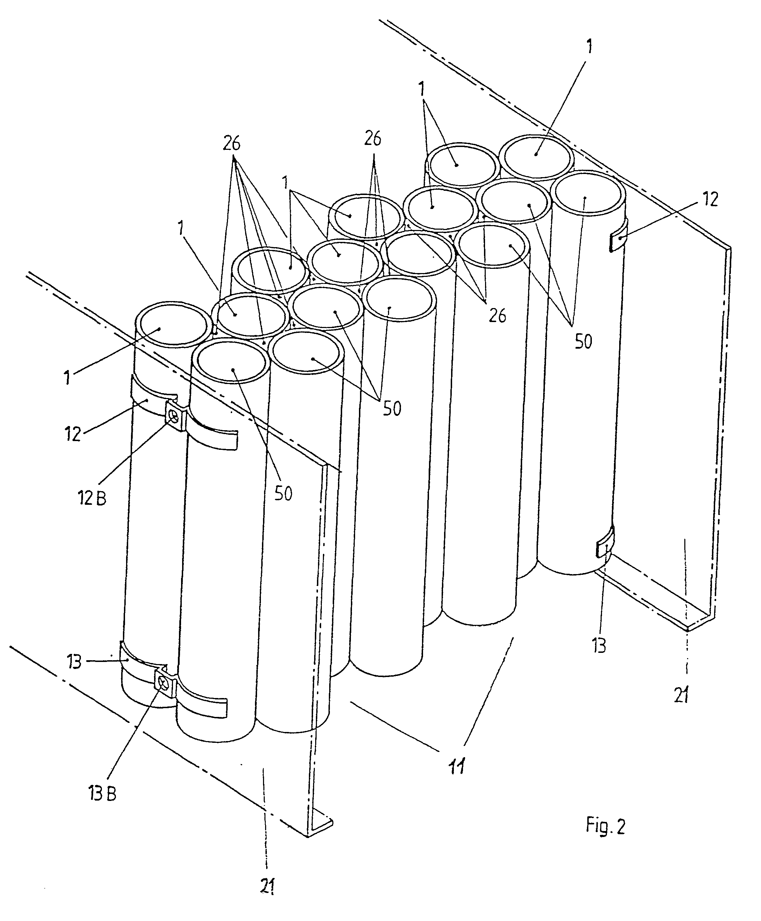

Figur 1 zeigt zwei Speicherzellen 1 und 50, die beide gleich aufgebaut sind, so daß nur der Aufbau der Speicherzelle 1 näher erläutert wird. Die Speicherzelle 1 wird nach außenhin durch ein metallisches Gehäuse 2 begrenzt, das becherförmig ausgebildet ist. Das metallische Gehäuse 2 umfaßt ein inneres Gehäuseelement 2I und ein äußeres Gehäuseelement 2A. Zwischen dem inneren und dem äußeren Gehäuseelement 2I, 2A ist eine Isolierung 2G angeordnet. Die Isolierung wird durch eine Hülse aus Glimmer gebildet. Das innere Gehäuseelement 2I ist becherförmig ausgebildet und vorzugsweise aus Aluminium gefertigt. Seine Abmessungen sind so gewählt, daß die Isolierung 2G zwischen ihm und dem äußeren Gehäuseelement 2A angeordnet werden kann. Erfindungsgemäß besteht die Möglichkeit die Isolierung 2G auch durch eine entsprechende Beschichtung zu bilden, die auf die Innenflächen des äußeren Gehäuseelementes 2A oder auf die Anschlußflächen des inneren Gehäuseelementes 2I aufgetragen ist. Das äußere Gehäuseelement 2A ist mehrteilig ausgebildet. Insbesondere umfaßt das äußere Gehäuseelement eine zylinderförmige Hülle 2H und 2 Scheiben 2S. Die zylinderförmige Hülle 2H begrenzt das innere Gehäuseelement 2I im Bereich seiner Seitenflächen, während die beiden Scheiben 2S die Speicherzelle an ihrem oberen und unteren Ende verschließen. Die Hülle 2H sind die beiden Scheiben 2S sind vorzugsweise aus Stahl gefertigt. Sie können jedoch auch aus einem dispersionsgehärteten Aluminium, aus Titan oder Nickel hergestellt werden. Das innere Gehäuseelement 2I dient zur Leitung des elektrischen Stromes, während das äußere Gehäuseelement 2A eine reine Stützfunktion für das innere Gehäuseelement übernimmt. Das äußere Gehäuseelement 2A ist sehr dünnwandig ausgebildet. Bei dem hier dargestellten Ausführungsbeispiel weisen die zylinderförmige Hülle 2H und die beiden Scheiben 2S eine Wandstärke von etwa 0,2 mm auf. Im Inneren der Speicherzelle 1 ist der ebenfalls becherförmig ausgebildete Festelektrolyt 3 angeordnet, dessen Abmessungen so gewählt sind, daß zwischen ihm und dem inneren Gehäuseelement 2I rundrum ein zusammenhängender Raum gebildet wird, der bei dem hier dargestellten Ausführungsbeispiel als Kathodenraum 4 dient. Dieser ist mit einem Graphit ausgefüllt, welcher mit Schwefel getränkt ist (hier nicht dargestellt). Der Innenbereich des Festelektrolyten 3 dient als Anodenraum und enthält bei dem hier dargestellten Ausführungsbeispiel flüssiges Natrium (hier nicht dargestellt). Der Festelektrolyt ist am oberen Ende mit einen Isolierring 6 verbunden, der aus Alphaaluminiumoxid gefertigt ist. Der Isolierring 6 ist über ein Glaslot (hier nicht dargestellt) mit dem Festelektrolyten 3 verbunden. Der Isolierring 6 ist so ausgebildet, daß er einen nach außen weisenden Flansch bildet. Die seitlichen Begrenzungsflächen des Isolierringes 6 sind mit dem inneren Gehäuseelement 2I, insbesondere mit dessen Innenflächen fest verbunden. Die Verbindung zwischen dem Isolierring 6 und den inneren Gehäuseelement 2I kann beispielsweise mittels Thermokompression hergestellt werden. Der Anodenraum 5 wird durch eine Isolierscheibe 7 verschlossen, die auf dem Isolierring 6 aufliegt. Auf dieser Isolierscheibe 7 ist die zu dem äußeren Gehäuseelement 2A gehörende Scheibe 2S aufgelegt, die den Verschluß der Speicherzelle nach außenhin bildet und gleichzeitig als Stützelement dient. Die Isolierscheibe 7 kann beispielsweise aus Glimmer gefertigt werden. Die Scheibe 2S ist aus dem gleichen Material wie die übrigen Teile des äußeren Gehäuseelementes 2A gefertigt. Zur Halterung der Scheibe 2S auf der Oberfläche der Speicherzelle 1 wird der Rand der zylindrischen Hülle 2H nach innen umgebördelt. Zu diesem Zweck ist die Abmessung der Hülle 2H so gewählt, daß sie das innere Gehäuseelement 2I sowohl nach oben als auch nach unten einige Millimeter überragt. Am unteren Ende der Speicherzelle ist gegen den Boden des inneren Gehäuseelementes 2I eine Isolierscheibe 7 gesetzt, die beispielsweise aus Glimmer gefertigt ist. Unter dieser Glimmerscheibe ist die Scheibe 2S angeordnet, die zum äußeren Gehäuseelement 2A gehört, und eine Stützfunktion ausübt. Diese beiden Scheiben 2S, 7 werden durch einen Sicherheitsring 8 gehalten, der auf seinem Umfang mit Vorsprüngen versehen ist. In der Höhe des Rings 8 ist die Innenfläche der Hülle 2H an entsprechenden Stellen mit Ausnehmungen versehen, in welche die Vorsprünge des Rings 8 eingerastet werden können. Zusätzlich werden die beiden Scheiben 2S und 7 durch die nach innen umgebördelte Hülle 2H gehalten. Die Umbördelung ist an diesem Ende jedoch nicht so breit ausgebildet, wie am oberen Ende der Speicherzelle, so daß die Möglichkeit besteht, den Sicherungsring 8 zu lösen, die beiden Scheiben 2S und 7 zu entfernen und das innere Gehäuseelement 2I zusammen mit dem darin angeordneten Festelektrolyten 3 herauszunehmen. Am oberen Ende der Speicherzelle ist der kathodische Anschlußpol 9K und der anodische Anschlußpol 9A vorgesehen, über welche die Speicherzelle 1 elektrisch leitend mit weiteren Speicherzellen 50 verbindbar ist. Erfindungsgemäß kann die Speicherzelle 1 über ihr äußeres Gehäuseelement 2A, insbesondere die Hülle 2H mit weiteren Speicherzellen fest verbunden werden. Figur 1 zeigt eine weitere Speicherzellen 50, die in gleicher Weise wie Speicherzelle 1 ausgebildet ist. Wie anhand von Figur 1 des weiteren zu sehen ist, sind die beiden Speicherzellen 1 und 50 am oberen und unteren Ende ihrer beide Hüllen 2H durch Punktschweißungen 10 fest miteinander verbunden. Es handelt sich hierbei um eine rein mechanische Verbindung. Da zwischen dem äußeren Gehäuseelement 2A und dem inneren Gehäuseelement 2I eine Isolierung, angeordnet ist, werden die beiden Speicherzellen 1 und 50 durch die Punktschweißung 10 nicht elektrisch miteinander verbunden. Durch diese erfindungsgemäße Verhindung der Speicherzellen über ihre äußeren Gehäuseelemente können selbige zu einem Modul zusammengefaßt werden. In Figur 2 ist ein solcher Modul 11 dargestellt. Der hier gezeigte Modul 11 umfaßt 16 Speicherzellen 1 und 50. Zur Bildung des Moduls sind die Speicherzellen so angeordnet, daß der Modul 11 eine Ausdehnung in Längsrichtung aufweist. Zur Erzielung einer optimal dichtesten Packung von Speicherzellen innerhalb einer Hochtemperatur-Speicherbatterie werden die Speicherzellen so angeordnet, daß jeweils zwei Speicherzellen 1, 50 in einer zur Längsachse des Moduls 11 senkrecht angeordneten Ebene positioniert sind. Das nächste Speicherzellenpaar 1 und 50 ist so positioniert, daß die Speicherzelle 1 bzw. 50 auf Lücke gesetzt ist, d.h. daß sie in die zwischen den ersten beiden Speicherzellen 1 und 50 gebildete Vertiefung wenigstens bereichsweise eingesetzt ist. Erfindungsgemäß sind die vier Speicherzellen 1, 50 im oberen und unteren Bereich ihrer Hüllen 2H durch Punktschweißungen 10 (hier nicht dargestellt) mechanisch miteinander verbunden. An die beiden Speicherzellen 1 und 50 schließt sich ein weiteres Speicherzellenpaar 1 und 50 an, wobei wiederum eine Speicherzelle 1, 50 auf Lücke gesetzt ist, während die zweite Speicherzelle 1, 50 etwas zersetzt zu dieser Lücke angeordnet ist. Dabei sind auch hier jeweils direkt benachbarte Speicherzellen 1, 50 über ihre äußeren Gehäuseelemente 24 verbunden.

Durch diese erfindungsgemäße Verbindung der Speicherzellen, wird erreicht, daß die dem Modul 11 zugehörigen Speicherzellen in einer dichtmöglichsten Packung angeordnet sind. Zwischen jeweils drei direkt benachbarten Speicherzellen 1, 50 ist jeweils ein Freiraum 26 ausgebildet, durch den ein Kühlmedium geleitet werden kann. Die so miteinander verbundenen Speicherzellen bilden einen Verband, der über Halterungen, welche an den Enden des Moduls 11 vorgesehen sind, innerhalb der Hochtemperatur-Speicherbatterie freitragend befestigt werden kann. Bei den Halteelementen handelt es sich, wie anhand von Figur 2 zu sehen ist, um W-förmige Halteelemente 12, 13, welche die Speicherzellen 1 und 50, die an den Enden des Moduls angeordnet sind teilweise umfassen. Die Halteelemente 12 und 13 sind am oberen und unteren Ende des sich hier befindlichen Speicherzellenpaares 1, 50 befestigt. Vorzugsweise sind sie an den äußeren Gehäuseelementen dieser Speicherzellen 1, 50 festgeschweißt. Im Bereich zwischen den beiden Speicherzellen weisen die Halteelemente 12 und 13 wenigstens eine Bohrung 12B bzw. 13B auf, durch welche eine Schraube (hier nicht dargestellt) gesteckt werden kann, mit der die Halteelemente 12, 13 an der inneren Begrenzungswandung der Hochtemperatur-Speicherbatterie oder an einem Halterahmen 21 festgeschraubt werden können.

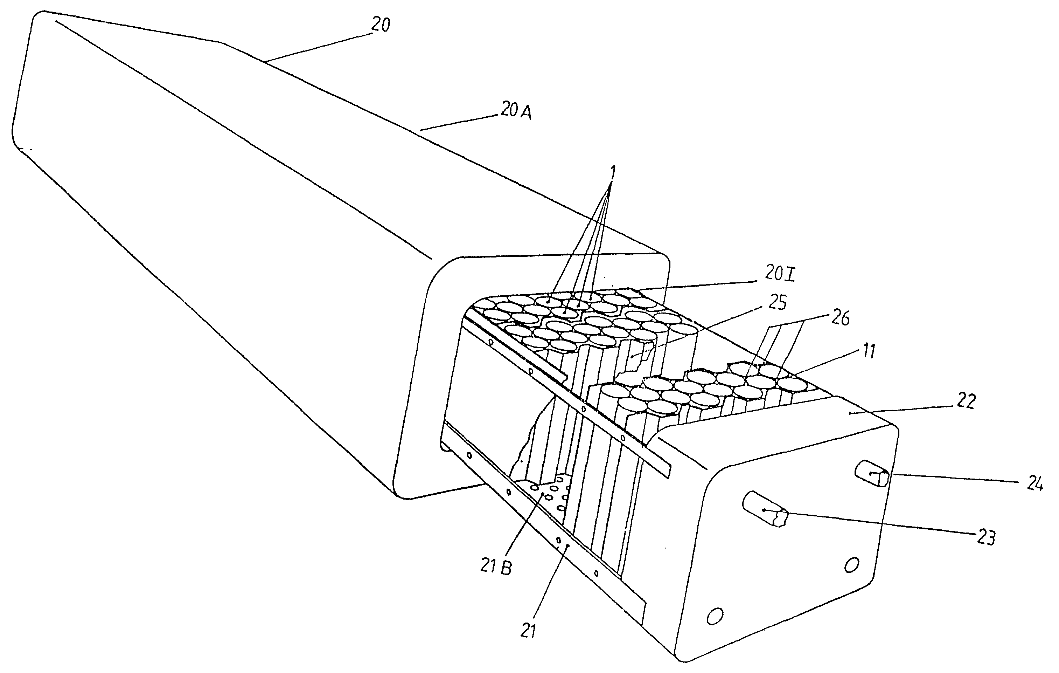

In Figur 3 ist eine Hochtemperatur-Speicherbatterie dargestellt, die aus den erfindungsgemäßen Modulen 11 aufgebaut ist. Die Hochtemperatur-Speicherbatterie wird durch ein doppelwandiges Gehäuse 20 gebildet, das aus Metall gefertigt ist. Die Abstände zwischen der äußeren Gehäusewandung 20A und der inneren Gehäusewandung 20I sind so gewählt, daß zwischen ihnen ein Raum verbleibt, der mit einem Isoliermaterial (hier nicht dargestellt) ausgefüllt werden kann. Der Innenraum des Gehäuses 20 dient zur Aufnahme der Speicherzellen. Erfindungsgemäß sind die zum Aufbau der Hochtemperatur-Speicherbatterie verwendeten Module 11 innerhalb eines kastenförmigen Halterahmens 21 angeordnet, der wie eine Schublade in den Innenraum des Gehäuses 20 eingeschoben und diesem auch in entsprechender Weise entnommen werden kann. An der Stirnseite des Halterahmens ist ein Stopfen 22 befestigt, mit dem das Gehäuse 20, insbesondere die Öffnung an der Stirnseite des Gehäuses 20, über die Halterahmen in und aus der Batterie entnommen werden kann, verschließbar ist. Der Stopfen 22 ist innen mit einem Isoliermaterial ausgefüllt. Er weist Öffnungen auf, durch welche die elektrischen Anschlußleitungen 23 und die Zuführungen und Ableitungen für die Kühlluft 24 hindurchgeführt sind. Wie anhand von Figur 3 zu sehen ist, sind in dem Halterahmen die Module 11 so angeordnet, daß ihre Längsachsen senkrecht zur Längsachse des Halterahmens 21 verlaufen. Über Halteelemente (hier nicht dargestellt) sind die Module 11 an den seitlichen Begrenzungsflächen des Halterahmens 21 festgeschraubt. Die Abmessungen des Halterahmens sind so gewählt, daß die Module so an den seitlichen Begrenzungen des Halterahmens 21 festgeschraubt werden können, daß die unteren Begrenzungsflächen der Speicherzellen einen definierten Abstand vom Boden des Halterahmens 21 aufweisen. Hierdurch wird ein durchgehender Freiraum zwischen dem Boden 21B des Halterahmens 21 und den unteren Begrenzungsflächen der Speicherzellen gebildet wird. Der Boden 21B des Halterahmens 21 ist mit Öffnungen versehen, durch die ein Kühlmedium hindurchtreten kann. Die Abmessungen des Innenraumes der Batterie sind so gewählt, daß zwischen dem oberen Ende der Speicherzellen und der inneren Begrenzungswandung 20I des Gehäuses 20 ein Freiraum verbleibt, durch den ebenfalls das Kühlmedium, insbesondere Luft strömen kann.

Wie anhand von Figur 3 zu sehen ist, wird zwischen zwei benachbarten Modulen 11 jeweils eine Isolierschicht 25 angeordnet. Die Isolierschicht 25 erstreckt sich über die gesamte Länge der Module 11. Ihre Höhe ist an die Höhe der Speicherzellen 1 angepaßt. Vorzugsweise wird die Isolierschicht 25 aus einer Glimmer- oder Glasfaserfolie gebildet.

Wie anhand der in der Hochtemperatur Speicherbatterie angeordneten Module 11 zu sehen ist, verbleiben zwischen den zu einem Modul zusammengefaßten Speicherzellen, insbesondere zwischen benachbarten Speicherzellen Freiräume 26. Diese erstrecken sich vom oberen bis zum unteren Ende der Speicherzellen. Sie stehen in direktem Kontakte den über- bzw. unterhalb der Speicherzellen angeordneten Freiräumen, durch welche das Kühlmedium für die Speicherzellen geleitet wird. Beispielsweise kann das zur Kühlung der Speicherzellen vorgesehene Kühlmedium in den unterhalb der Speicherzellen angeordneten Freiraum geleitet werden. Von dort aus strömt das Kühlmedium in die zwischen den Speicherzellen eines jeden Moduls verbleibenden Freiräume 26, wobei es die von den Speicherzellen abgegebene Wärme aufnimmt. Am oberen Ende der Speicherzellen gelangt das Kühlmedium in den Freiraum über den Speicherzellen von wo aus es zur Austrittsöffnung innerhalb der Hochtemperatur-Speicherzelle strömt.

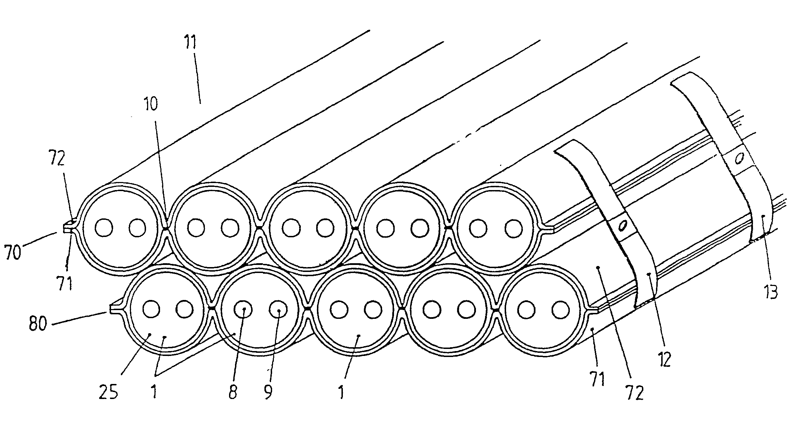

In Figur 4 ist eine Variante des in Figur 2 dargestellten Moduls gezeigt. Der Modul umfaßt hierbei lediglich 10 Speicherzellen. Die Anzahl der Speicherzellen kann zur Ausbildung eines Moduls bei Bedarf auch auf 16 erhöht bzw. auf eine geringe Anzahl reduziert werden. Zur Ausbildung des Moduls 11 sind jeweils 5 Speicherzellen hintereinander, eine Reihe bildend angeordnet. Es werden dadurch zwei Speicherzellenreihen 70 und 80 gebildet, die parallel zueinander und in engem Kontakt angeordnet sind. Die beiden Speicherzellenreihen 70 und 80 sind so aneinandergefügt, daß die Speicherzellen der Reihe 80 in Zwischenräumen der Speicherzellenreihe 70 teilweise angeordnet sind. Erfindungsgemäß werden die äußeren Gehäuseelemente der Speicherzellen 1 hier nicht durch jeweils eine Hülse 2H gebildet. Vielmehr werden bei der Fertigung des Moduls 11 die Speicherzellen der Reihe 70 beidseitig von einer dünnen Platte 71 und 72 umgeben, wobei die Höhe der beiden Platten 70 und 71 an die Höhe der Speicherzellen angepaßt ist. Die beiden Platten sind beispielsweise aus Stahl gefertigt. Sie können auch aus einem anderen temperaturbeständigen Material hergestellt werden. Die beiden Platten 71 und 72 sind so geformt, daß sie jede Speicherzelle 1 jeweils über deren halben Umfang vollständig umschließen. Zwischen zwei aufeinanderfolgenden Speicherzellen sind die beiden Platten 71 und 72 durch eine Punktschweißung 10 zusammengefügt. An den beiden Enden des Moduls 11 sind die beiden Platten 71 und 72 ebenfalls miteinander verbunden, so daß auch die an den Enden befindlichen Speicherzellen 1 von den beiden Platten 71 und 72 hüllenartig umgeben sind. Die Speicherzellen der Reihe 80 sind in gleicher Weise wie die Speicherzellen der Reihe 70 von zwei Platten 71 und 72 umgeben, welche die äußeren Gehäuseelemente 2A der Speicherzellen 1 bilden.

Die inneren Gehäuseelemente der Speicherzellen 1 sind aus Aluminium gefertigt, und in gleicher Weise ausgebildet wie die inneren Gehäuseelemente der in den Figuren 1 bis 3 dargestellten Speicherzellen. Die obere und untere Begrenzung der Speicherzellen 1 wird auch hierbei wieder durch eine Scheibe 2S gebildet, die aus dem gleichen Material wie die Platten 71 und 72 gefertigt ist. Abweichend von den in den Figuren 1 bis 3 dargestellten Ausführungsbeispielen werden die Scheiben 2S hierbei nicht durch das Umbördeln der äußeren Gehäuseelemente nach innen gehalten, sondern durch jeweils einen Sicherheitsring 8, wie er in der in Figur 1 dargestellten Ausführungsform gezeigt und in der dazugehörigen Beschreibung erläutert ist. Die Sicherheitsringe 8 sind auch hierbei mit Vorsprüngen versehen, die auf ihrem Umfang angeordnet sind. Die Vorsprünge (hier nicht dargestellt) sind in Ausnehmungen eingerastet, die sich in den Innenflächen der Platten 71 und 72 befinden. Wie anhand von Figur 4 des weiteren zu sehen ist, weist jede Speicherzelle elektrische Anschlußelemente 9A und 9K auf, über welche jede Speicherzelle mit den benachbarten Speicherzellen elektrisch verschaltet werden kann. An den beiden Enden des Moduls 11 sind wiederum jeweils zwei Halterungen 12 und 13 vorgesehen, mittels derer der Modul freitragend innerhalb der Hochtemperatur-Speicherbatterie (hier nicht dargestellt) gehalten werden kann.

**Patentansprüche**

1. Hochtemperatur-Speicherbatterie mit zwei oder mehreren Speicherzellen (1, 50) auf der Basis von Alkalimetall und Chalkogen, die jeweils wenigstens durch ein metallisches Gehäuse begrenzt sind, und jeweils eine definierte Anzahl von Speicherzellen (1, 50) zur Bildung eines Moduls (11) zusammengefaßt, definiert angeordnet und benachbarte Speicherzellen (1, 50) wenigstens bereichsweise über ihre äußeren Gehäuseelemente (2H) miteinander verbunden sind, *dadurch gekennzeichnet,* daß das Gehäuse (2) jeder Speicherzelle (50) durch wenigstens zwei konzentrisch angeordnete Gehäuseelemente (2A, 2I) gebildet ist, die durch eine elektrische Isolierung (2G) voneinander getrennt sind, daß das innere Gehäuseelement (2I) becherförmig ausgebildet und aus Aluminium oder einem anderen Metall gefertigt ist, und daß das äußere Gehäuseelement (2A) durch eine zylindrische Hülse (2H) und zwei die Speicherzelle (1, 50) oben und unten begrenzende Scheiben (2S) gebildet und vollständig aus Stahl, dispersionsgehärtetem Aluminium, Nickel oder Titan gefertigt ist.

2. Hochtemperatur-Speicherbatterie nach Anspruch 1, dadurch gekennzeichnet, daß die Isolierung (2G) zwischen den beiden Gehäuseelementen (2I, 2G) durch eine Hülse aus Glimmer oder Glas bzw. durch eine Beschichtung auf den Innenflächen des äußeren Gehäuseelementes (2H) oder den Außenflächen des inneren Gehäuseelementes (2I) aus Glimmer oder Glas gebildet ist.

3. Hochtemperatur-Speicherbatterie nach einem der Ansprüche 1 oder 2, dadurch gekennzeichnet, daß bei mehreren hintereinander angeordneten, eine Reihe bildenden Speicherzellen (1) eines Moduls (11) die äußeren Gehäuseelemente (2A) einer Reihe (70, 80) von Speicherzellen (1) durch zwei gegeneinander gesetzte Platten (71, 72) gebildet sind, welche die Speicherzellen (1) zwischen sich einschließen und hüllenartig umgeben, und daß die beiden Platten (71, 72) zwischen jeweils zwei Speicherzellen (1) einer Reihe (70, 80) bereichsweise oder über die gesamte Länge dieser beiden Speicherzellen (1) miteinander verbunden sind.

4. Hochtemperatur-Speicherbatterie nach einem der Ansprüche 1 bis 3, dadurch gekennzeichnet, daß die Speicherzellen (1, 50) eines jeden Moduls (11) so angeordnet sind, daß der Modul (11) eine lineare Ausdehnung aufweist und maximal zwei Speicherzellen in einer zur Längsachse des Moduls (11) senkrecht liegenden Ebene angeordnet sind.

5. Hochtemperatur-Speicherbatterie nach einem der Ansprüche 1 bis 3, dadurch gekennzeichnet, daß die Speicherzellen (1, 50) eines jeden Moduls (11) paarweise hintereinander angeordnet sind, derart, daß jeweils eine Speicherzelle des nächstfolgenden Paares (1, 50) wenigstens bereichsweise in der zwischen den beiden Speicherzellen (1, 50) des ersten Paares gebildeten Lücke angeordnet ist, und daß die äußeren Gehäuseelemente (2A) der Speicherzellen (1, 50) durch Punktschweißungen (10) im oberen und unteren Bereich der Speicherzellen (1, 50) miteinander verbunden sind.

6. Hochtemperatur-Speicherbatterie nach einem der Ansprüche 1 bis 5, dadurch gekennzeichnet, daß jeweils das letzte Paar von Speicherzellen (1, 50) an jenem Ende eines Moduls (11) mit zwei Halterungen (12, 13) versehen ist, mittels derer jeder Modul (11) an der inneren Gehäusewand der Hochtemperatur-Speicherbatterie direkt oder an einem aus der Hochtemperatur-Speicherbatterie herausnehmbaren Halterahmen (21) befestigt ist.

7. Hochtemperatur-Speicherbatterie nach einem der Ansprüche 1 bis 7, dadurch gekennzeichnet, daß jeder Modul (11) gegen die direkt angrenzenden Module (11) durch eine Isolierung (25) abgegrenzt ist, und daß jeder Modul (11) so befestigt ist, daß alle Speicherzellen (1, 50) im Bereich ihrer oberen und unteren Begrenzungsflächen berührungsfrei gehalten sind.

**Claims**

1. High-temperature storage battery having two or more storage cells (1, 50) based on alkali metal and chalcogen, each of which is bounded at least by one metallic housing, and a defined number of storage cells (1, 50) is in each case combined to form a module (11), placed in defined arrangement and adjacent storage cells (1, 50) are connected together at least in certain areas via their outer housing elements (2H), characterized in that the housing (2) of each storage cell (50) is formed by at least two concentrically arranged housing elements (2A, 2I), which are separated from one another by an electrical insulation (2G), in that the inner housing element (2I) is of pot-shaped design and is manufactured from aluminium or another metal, and in that the outer housing element (2A) is formed by a cylindrical sleeve (2H) and two discs (2S) bounding the storage cell (1, 50) at the top and at the bottom and is manufactured completely from steel, dispersion-hardened aluminium, nickel or titanium.

2. High-temperature storage battery according to claim 1, characterized in that the insulation (2G) between the two housing elements (2I, 2G) is formed by a sleeve of mica or glass or by a coating on the inner surfaces of the outer housing element (2H) or the outer surfaces of the inner housing element (2I), of mica or glass.

3. High-temperature storage battery according to either of claims 1 or 2, characterized in that in the case of a plurality of storage cells (1) of a module (11), said cells being arranged one behind the other and forming a row, the outer housing elements (2A) of a row (70, 80) of storage cells (1) are formed by two plates (71, 72), which are placed against one another, enclose the storage cells (1) between them and surround them jacket-fashion, and in that, between in each case two storage cells (1) of a row (70, 80), the two plates (71, 72) are connected to one another over certain areas or over the entire length of these two storage cells (1).

4. High-temperature storage battery according to one of claims 1 to 3, characterized in that the storage cells (1, 50) of each module (11) are arranged in such a way that the module (11) has a linear extension and a maximum of two storage cells are arranged in a plane lying perpendicular to the longitudinal axis of the module (11).

5. High-temperature storage battery according to one of claims 1 to 3, characterized in that the storage cells (1, 50) of each module (11) are arranged in pairs one behind the other, in such a way that in each case one storage cell of the next pair (1, 50) is arranged at least over a certain area in the gap formed between the two storage cells (1, 50) of the first pair, and in that the outer housing elements (2A) of the storage cells (1, 50) are connected to one another by spot welds (10) in the upper and lower region of the storage cells (1, 50).

6. High-temperature storage battery according to one of claims 1 to 5, characterized in that in each case the last pair of storage cells (1, 50) at each end of a module (11) is provided with two holding devices (12, 13), by means of which each module (11) is secured on the inner housing wall of the high-temperature storage battery, either directly or on a retaining frame (21) which can be removed from the high-temperature storage battery.

7. High-temperature storage battery according to one of claims 1 to 7, characterized in that each module (11) is delimited from the directly adjoining module (11) by an insulation (25) , and in that each module (11) is secured in such a way that all storage cells (1, 50) are held contactlessly in the region of their upper and lower boundary faces.

## Revendications

1. Batterie d'accumulateur à haute température avec deux ou plus de deux éléments accumulateurs (1, 50) à base de métal alcalin et de chalcogène, qui sont délimités par au moins une enveloppe métallique, un nombre défini d'éléments accumulateurs (1, 50) ordonnés de façon définie étant groupés en un module (11), et les éléments accumulateurs voisins (1, 50) étant reliés entre eux, au moins par zones, par leurs éléments d'enveloppe extérieurs (2H), caractérisée par le fait que l'enveloppe (2) de chacun des éléments accumulateurs (50) est formée d'au moins deux éléments d'enveloppe (2A, 2I), disposés concentriquement, séparés entre eux par une isolation électrique (2G), que l'élément d'enveloppe intérieur (2I) est en forme de godet et est fabriqué en aluminium ou en un autre métal, et que l'élément d'enveloppe extérieur (2A) est formé d'un manchon cylindrique (2H) et de deux disques (2S) délimitant l'élément accumulateur (1, 50) au sommet et à la base, et est fabriqué entièrement en acier, en aluminium durci par précipitation, en nickel ou en titane.

2. Batterie d'accumulateur à haute température selon revendication 1, caractérisée par le fait que l'isolation (2G) entre les deux éléments d'enveloppe (2I, 2A) est formée par un manchon en mica ou en verre ou encore par un revêtement en mica ou verre des faces internes de l'élément d'enveloppe extérieur (2A) ou des faces externes de l'élément d'enveloppe intérieur (2I)

3. Batterie d'accumulateur à haute température selon l'une des revendications 1 ou 2, caractérisée par le fait que plusieurs éléments accumulateurs (1) d'un module (11) étant disposés en une rangée à la suite les uns des autres, les éléments d'enveloppe extérieurs (2A) d'une rangée (70, 80) d'éléments accumulateurs (1) sont constitués par deux plaques opposées (71, 72) qui renferment entre elles les éléments accumulateurs (1) et les entourent à la façon d'une gaine, et que les deux plaques (71, 72) sont reliées entre elles entre chaque fois deux éléments accumulateurs (1) d'une rangée (70, 80) par zones ou sur toute la longueur de ces deux éléments d'accumulateurs (1).

4. Batterie d'accumulateur à haute température selon l'une des revendications 1 à 3, caractérisée par le fait que les éléments accumulateurs (1, 50) de chaque module (11) sont disposés de telle sorte que le module (11) présente une extension linéaire et que deux éléments accumulateurs au maximum sont disposés dans un plan perpendiculaire à l'axe longitudinal du module (11).

5. Batterie d'accumulateur à haute température selon l'une des revendications 1 à 3, caractérisée par le fait que les éléments accumulateurs (1, 50) de chaque module (11) sont disposés les uns derrière les autres par paires, de telle sorte qu'un élément accumulateur de la paire suivante (1, 50) soit, par zones au moins, disposé chaque fois dans l'intervalle entre les deux éléments accumulateurs (1, 50) de la première paire et que les éléments d'enveloppe extérieurs (2A) des éléments accumulateurs (1, 50) sont reliés entre eux par des points de soudure (10) à la partie supérieure et à la partie inférieure des éléments accumulateurs (1, 50).

6. Batterie d'accumulateur à haute température selon l'une des revendications 1 à 5, caractérisée par le fait que la dernière paire d'éléments accumulateurs (1, 50), à chaque extrémité d'un module (11) est munie de deux supports (12, 13) au moyen desquels chaque module (11) est fixé à la paroi intérieure de l'enveloppe de la batterie d'accumulateur à haute température, directement ou sur un châssis porteur (21) pouvant être extrait de la batterie d'accumulateur à haute température.

7. Batterie d'accumulateur à haute température selon l'une des revendications 1 à 7, caractérisée par le fait que chaque module (11) est délimité par une isolation (25) vis-à-vis des modules directement contigus (11) et que chaque module (11) est fixé de telle sorte que tous les éléments accumulateurs (1, 50) soient maintenus sans contact dans la région de leurs surfaces de délimitation supérieure et inférieure.

EP 0 144 747 B1

Fig.1

Fig. 2